# EUROPEAN PATENT APPLICATION

(11) **EP 1 900 547 A1**
(43) Date of publication of application: **19.03.2008**
(21) Application number: 07115403.3
(22) Date of filing: 31.08.2007
(51) Int. Cl.: B60B 17/00

(54) **Seamless rolled railway wheel**

(30) Priority: 13.09.2006 UA 2006009823
(71) Applicant: Open Joint Stock Company "Interpipe Nizhnedneprovsky Tube Rolling Plant", 49081 Dnipropetrovsk (UA)
(72) Inventor: Korotkov, Andriy, 49128 Dnipropetrovsk (UA); Yesaulov, Gennadiy, 49070 Dnipropetrovsk (UA); Polskiy, Georgiy, 49070 Dnipropetrovsk (UA); Gorb, Yevgeniy, 49051 Dnipropetrovsk (UA); Pasternak, Mikola, 49000 Dnipropetrovsk (UA)
(74) Representative: Kastel, Stefan

(57) **Abstract**

This invention relates to the area of manufacturing disk wheels for railway vehicles with disks being integral with rim and having rail-engaging elements. A seamless rolled railway wheel 1 comprising a rim 2, a hub 3 and a disk 4 formed by inner 5 and outward 6 curved surfaces arranged in such a way, wherein a central line 7 of the radial section of said disk in the place of its conjugation with said rim 2 is shifted along the wheel axis 9 in relation to a central line 8 of the radial section of said disk in the place of its conjugation with said hub 3 toward said outward curved surface 6, the value of the shift of said central line 7 of the radial section of said disk 4.

The invention provides the decrease of magnitude of the total values of inner stresses by optimal distribution of stresses into the wheel volume that will result in the increase of the wheel service life.

## Description

### Technical Field

This invention relates to the area of manufacturing disk wheels for railway vehicles with disks being integral with rim and having rail-engaging elements.

### Background of the invention

Recently conditions of rolling stock exploitation have essentially changed. These changes were caused by the growth of movement speed and increase of load up to 30 tons per axis.

In the process of their operation seamless rolled railway wheels are exposed to the wide range of factors among which both outward loads of the railway track and rolling stock elements as well as temperature stresses appeared in the wheel while braking process. The resulted factual stresses define greatly wheel resistance to fracture and damages and wheel service life, in whole.

One of the major factors affecting seamless rolled railway wheel service life is values of total internal stresses caused by wheel exploitation as well as character of stress distribution into the wheel volume.

Occurrence of considerable magnitudes of the value of total internal stresses in seamless rolled railway wheel is the result of joint influence both of normal static and sign-variable dynamic loadings acting in radial and axial directions as well as temperature stresses caused by friction between braking shoes and rim while rolling stock braking.

In case when magnitudes of the values of total stresses are close to or more than fatigue life limit of the wheel material over a long period of time, fatigue cracks are formed in the wheel that may result in premature fracture of the wheel.

When seamless rolled railway wheel is under unfavourable load conditions, concentration of stresses caused by external loads and temperature are occurred in it. In this case total value of inner stresses may be higher than fluidity limit of the material of which the wheel is made and residual deformations appear. They change wheel operational properties which may reduce wheel service life.

Seamless rolled railway wheels exploitation experience shows that in the majority of cases wheel malfunctioning resulted from disk fractures caused by significant fatigue stresses. As a rule, wheel is fractured in the place of disk conjugation with rim.

The traditional way of reducing total inner stresses and their optimum distributing into the wheel volume is choosing rational seamless rolled railway disk structure as well as mutual arranging of its elements.

Conventional seamless rolled railway wheel consists of a rim, a hub and a disk formed by outward and inner surfaces (RU 2085403 C1 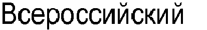 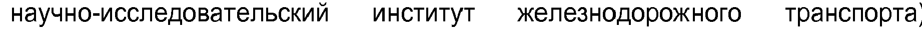 )

Outward and inner surfaces of the conventional seamless rolled railway wheel which form the wheel disk are designed straight linear and inclined to the wheel axis at 71 - 75 degrees.

Disadvantages of the conventional seamless rolled railway wheel are uneven distribution of total inner stresses over the wheel volume, significant axial movement of the rim relative to the hub that result in the reduction of the wheel service life. These disadvantages are caused by high magnitudes of values of inner stresses at inner surface of the disk in the place of its conjugation with the rim, which are the result of external loadings and high magnitudes of internal stresses at outward surface of the disk in the place of its conjugation with the hub due to the combined actions of the significant temperature stresses caused by braking shoes friction along the wheel rim while braking process and of the side pressure on the wheel edge while rolling stock is passing curved sections of railway track.

The known seamless rolled railway wheel according to SU 1139647 A1 (VEB Radzatsfabrik llsenburg), 15.02.1985 comprises a rim, a hub and a disk which is formed by outward and inner curved surfaces.

The central line of axial disk section in the place of the known wheel conjugation with the rim coincides with the central line of axial disk section in the place of the known wheel conjugation with the hub.

The described above wheel structure allows to reduce magnitudes of stresses appeared in the place of the wheel conjugation with the rim as compared to the conventional wheel design.

Disadvantages of the known wheel are uneven distribution of total values of inner stresses over the wheel volume and high magnitude of axial wheel rim shift. These disadvantages are caused by high magnitudes of inner stresses at inner surfaces of the central wheel section resulted from external loadings caused by heating while braking process or when rolling stock is passing curved sections of railway track (when side loads on the wheel edge are high). Reduction of wheel service life is the result of the mentioned above disadvantages.

To reach the most preferable technical results and essential features of the wheel seamless a rolled railway wheel comprising a rim and a hub conjugated with a disk by curved transitional regions are known in the art. The known disk is formed by outward and inner curved surfaces which are made so that outward curved disk surface from the rim side is formed by a first outward radius curvature (R1) and by a second outward radius curvature (R2) from the hub side with the curving that coincides with the direction of the first radius curvature (R1) and connected with each other the third outward radius curvature (R3) with curving opposite to the direction of the first radius curvature (R1) and the second outward curvature (R2). The inner curved surface of the disk from the side of the hub is formed by a first inner radius curvature (R4) and a second inner radius curvature (R5) from the side of the hub with curving that coincides with the first inner radius curvature direction and connected with each other a third inner radius curvature (R6) with curving opposite to curving of the first inner curvature (R4) and the second inner curvature (R5). (RU 2259279 C1 (OAO Vyksunsky Matallurgical plant/ 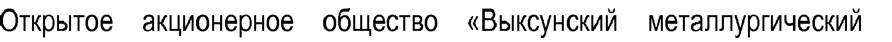 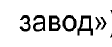 )

Shift of the central line of the axial disk section in the place of the known wheel disk conjugation with the rim in relation to the central line of the axial disk section in the place of its conjugation with the hub lies within a range of 10 - 25 mm.

The described above structure of seamless rolled railway wheel allows to reduce magnitudes of inner stress at inner surface of the central part of the disk as well as to decrease the magnitude of axial wheel rim shift while heating during braking processes or when rolling stock passes the curved sections of railway track as compared to prior wheel structures.

However, a disadvantage of the known and described above wheel is uneven distribution of total inner stresses into the wheel volume. This disadvantage is caused by high magnitude of curving in the centre of the wheel disk that result in significant temperature stresses in the inner surface of the central part of the wheel disk that can develop fatigue cracks and reduce the wheel service life.

### Summary of the invention

Accordingly, the object of this invention is to provide a structure of seamless rolled railway wheel, the use of which will provide the decrease of total values of inner stresses due to their optimum distribution into the wheel volume whereby the wheel service life will be increased.

This objective may be accomplished with a seamless rolled railway wheel comprising a rim and a hub conjugated with a disk, wherein the disk is formed by inner and outward curved surfaces arranged in such a way that the central line of the radial section of the disk in the place of its conjugation with the rim is shifted along the wheel axis relative to the central line of radial section of the disk in the place of its conjugation with the hub toward the outward curved surface. According to the invention, the value of the shift of the central line of the radial section of the disk in the place of its conjugation with the rim relative to the central line of the radial section of the disk in the place of its conjugation with the hub toward its outward curved surface is within a range of 2 - 10 mm, and a distance between the central line of the radial section of the disk in the place of its conjugation with the hub and the point of the greatest curving of the inner curved surface of the disk is within a range from 4 mm toward the inner curved surface of the wheel to 6 mm toward the outward curved surface.

Thereby, the seamless rolled railway wheel disk is manufactured in the way, where the central line of the radial section of the disk in the place of its conjugation with the rim is shifted along the wheel axis relative to the central line of the radial section of said disk in the place of its conjugation with the hub toward the outward curved surface of said disk at a distance from 2 to 10 mm which is optimum because it provides the decrease of the values of stresses caused by the external loads in the places of the disk conjugation with the rim and the hub that finally results in the even distribution of the stresses in the wheel and the decrease of their total values.

The further increase of said shift toward the outward surface of the wheel over 10 mm leads to the significant increase of the disk stresses developed by temperature affects. In its turn, the decrease of said shift below 2 mm results in the increase of the stresses developed by external loads and their concentration in the seamless rolled railway wheel in the places of the disk conjugation with the rim and at the inner surface of the central portion of the wheel.

Designated distance between the central line of the radial section of the disk in the place of its conjugation with the hub and the point of the largest shift of the inner curved surface of the disk, which is within the range from 4 mm toward the inner curved surface of the disk to 6 mm toward the outward curved surface, provides the decrease of values of the stresses at the internal side of the wheel disk in the place of its largest deflection caused by the affects of the external loads, which finally results in the even distribution of the stresses in said wheel and the decrease of their total values.

The increase of said distance toward the outward curved surface of the disk upward 6 mm results in the significant increase of the stresses caused by external loads at the inner surface of the central portion of the seamless rolled railway wheel. In its turn, the increase of said distance toward the inner curved surface upward 4 mm results in the increase of the radial rigidity of the wheel and the decrease of the wheel rigidity in the axial direction.

The applied set of features allows to decrease the affects of total inner stresses in the wheel, in general that will diminish the probability of fatigue cracking in the portions of seamless rolled railway wheel which are under high loads, thereby to increase operational strength of the seamless rolled railway wheel and reliability of its structure and therefore, to increase the wheel service life.

### Brief Description of the Drawings

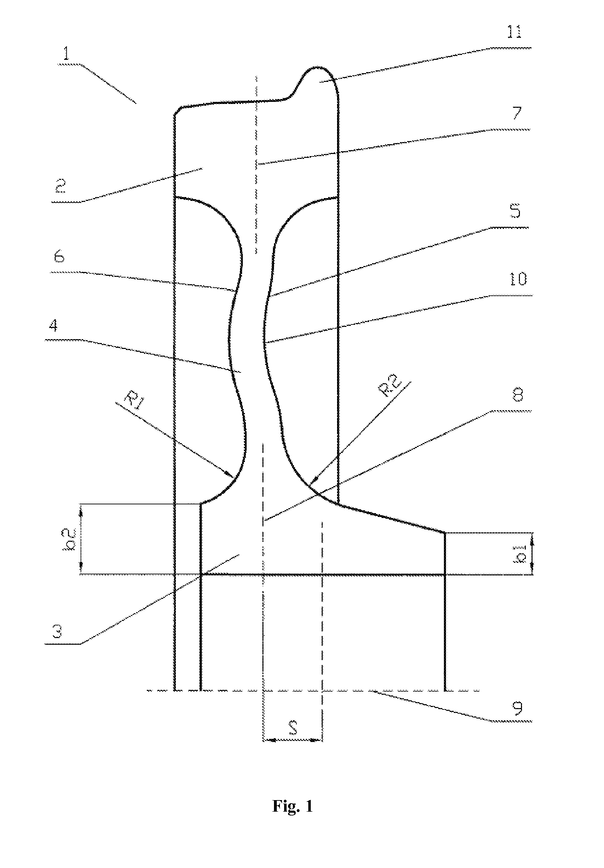

The invention will be described in further detail below reference being made to the accompanying drawing thereof, which shows a cross-sectional view of the seamless rolled railway wheel.

### Detailed Description of the Preferred Embodiment

A seamless rolled railway wheel 1 comprises a rim 2, a hub 3, a disk 4 formed by inner 5 and outward 6 curved surfaces. Disk 4 is manufactured in the way, wherein the central line 7 of the radial section of said disk 4 in the place of its conjugation with the rim 2 is shifted along the wheel axis 9 relative to the central line 8 of the radial section of said disk 4 in the place of its conjugation with the hub 3 toward the external curved surface 6 of said wheel. The value of this shift is within the range from 2 mm to 10 mm. The distance between the central line 8 of the radial section of the disk 4 in the place of its conjugation with the hub 3 and the point 10 of the largest curving of the inner curved surface 5 of the disk 4 is within the range from 4 mm toward the inner curved surface 5 of the wheel to 6 mm toward the external curved surface 6.

The central line 8 of the radial section of the disk 4 in the place of its conjugation with the hub 3 is shifted relative to the hub's middle at a distance S, which is within a range 35 - 55 mm.

The research proved that the designated structure of the disk 4 of the seamless rolled railway wheel 1, whereby the central line 7 of the wheel radial section in the place of the disk 4 conjugation with the rim 2 is shifted relative to the central line 8 of the radial section of said disk 4 in the place of its conjugation with the hub 3 along the axis 9 of said wheel toward the external curved surface of the wheel 6 , provides the significant decrease of the inner stresses caused by the affects of the vertical and lateral loads in the places of the disk 4 conjugation with the rim 2 and the hub 3.

In the same time the extremely large shift of the central line 7 of the radial section of the disk 4 in the place of its conjugation with the rim 2 relative the central line 8 of the radial section of the disk 4 in the place of its conjugation with the hub 3 along the wheel axis 9 toward the external curved surface of the wheel 6 results in the decrease of values of temperature stresses appeared in the seamless rolled railway wheel while braking process. Therefore, if the magnitude of the said shift is more than 10 mm, the increase of the wheel temperature stresses are higher than the decrease of stresses caused by the vertical and side loads that can be explained by said shift.

The place of conjugation of the outward curved surface 6 of the disk 4 with the hub 3 of the wheel 1 is manufactured with the radius R1 equal to 0.3 - 0.9 of the radius R2 in the place of conjugation of the inner curved surface 5 of the disk 4 with the hub 3 at the internal side (R1 = (0.3 - 0.9) R2).

Height b1 of the hub 3 at the internal side of the wheel is 0.5 - 0.9 of the height b2 of the hub 3 at the external side of the wheel (b1 = (0.5 - 0.9) b2).

Diameter D of the seamless rolled railway wheel rolling circle is 920 - 1020 mm.

The operation of the applied seamless rolled railway wheel structure is described below.

When the wheel 1 is rolling on the rail (not pointed in the figures) the load of the vertical force appeared in the plane of the rolling circle is transferred to the disk 4 and the hub 3 through the rim 2. As the result of kinematics oscillations, especially, when the rolling stock is moving along the curved regions of the railway track, the load of the lateral pressure from the edge 11 of the rim 2 of the wheel 1 on the rail appears. This load is also transferred to the disk 4.

The maximum value of the dynamics loads on the wheel of a rolling stock with axial load up to 30 tons are twice as high as maximum static load and, as a rule, are not higher than 300 kN for the vertical load and 147 kN for the lateral load. Moreover, the maximum magnitude of the values of total inner stresses in the wheel should not exceed wheel material fluidity limit which is 800 MPa.

There are three stressed zones in the applied for patent seamless rolled railway wheel: the place of the disk 4 conjugation with the rim 2, the place of the disk 4 conjugation with the hub 3, and the middle of the disk 4 in the point 10, where the values of curving are the highest.

The vertical load causes the compressive stresses in the wheel, which reach their maximum value in the place of the disk 4 conjugation with the rim 2 and in the point 10 of the largest curving of the inner surface 5 of said disk 4. The values of stresses in these points are not higher than 100 MPa that is much lower admitted magnitudes.

In same time the lateral load appeared while rolling stock is passing the curved regions of railway track in combination with the maintained vertical load causes bending moment in the disk 4 of the wheel 1 rising from the rim 2 to the hub 3 of the wheel 1.

The most stressed portion of the wheel 1 appeared as the result of the combined affects of vertical and lateral loads is a place of the disk 4 conjugation with the hub 3, where there is a hoop stress at the external side of the disk 4 and a compressive stress at the internal side of said disk.

In this case the magnitudes of the values of maximum stresses do not exceed 400 MPa.

Besides, while continuous braking process of rolling stock significant temperature stresses appear in the wheel. These temperature stresses are caused by intensive heat discharge when brake shoes are in contact with the rim 2 of the wheel 1 (not pointed in the figures).

In this case, when the external loads are not applied to the wheel, the highest magnitudes of values of stresses appeared in the point 10 of the largest curving of the inner curved surface 5 of the disk 4 and at the outward curved surface 5 in the place of the disk 4 conjugation with the hub 3 do not exceed 560 kN. This is much lower admitted magnitudes.

When vertical loadings are applied to the wheel 1, mutual compensation of temperature stresses and the stresses caused by the applied external forces are observed in the majority of wheel portions. This compensation is explained by the fact that in general, external forces cause compressive stresses, which are compensated by the hoop temperature stresses.

In case of the combined affects on the wheel 1 of the vertical and lateral loads, from the one hand, and temperature stresses, from the other, maximum stresses appear at the external side in the place of the disk 4 conjugation with the hub 3, the values of which are close to the admitted stress magnitudes. The high stress concentration in this place is explained by the fact that hoop temperature stresses reach their maximum in this place and are added to the hoop stresses appeared in this place as the result of lateral load applied to the wheel.

Radial manufacture of the place of conjugation of the outward curved surface 6 of the disk 4 with the hub 3 with the radius R1, which is lower than radius R2 in the place of conjugation of the inner curved surface 5 of the disk 4 with the hub 3, allows to decrease stress concentration caused by temperature stresses due to their even distribution into this portion of said outward curved surface 6.

In its turn, manufacture of the hub 3 with the height b2 at the external side of the wheel 1, which is higher than the height b1 of the hub 3 at the internal side, allows to decrease magnitude of value of the stresses caused by the lateral load, that also influences positively the stressed state of the wheel 1 in the place of the disk 4 transition into the hub 3.

The results of the research show that the stressed state of the wheel 1 in the places of the disk 4 transition in the rim 2 and the hub 3 and in the point 10 of the largest curving of the inner curved surface 5 do not exceed the critical value of 800 MPa (wheel material fluidity limit).

Having thus described in detail a preferred embodiment of the present invention, it will be apparent to those skilled in the art that the described structure of the wheel provides both the even distribution of stresses into the whole wheel volume and the reduction of the stresses in the wheel portions under high loads, therefore, decreasing the possible wheel fatigue cracking that will result in wheel service life increase.

Besides, use of the wheel structure applied for patent allows increasing damping properties which result in high wheel operational properties and railway vehicle movement security.

The applied for patent seamless rolled railway wheel can be manufactured commercially with the use of standard equipment. The highest cost economy can be reached when using the applied wheel in the structures of high speed passenger and freight cars with the increased load on axis up to 30 tons.

## Claims

1. A seamless rolled railway wheel 1 comprising a rim 2 , a hub 3 and a disk 4 formed by inner 5 and outward 6 curved surfaces arranged in such a way, wherein a central line 7 of the radial section of said disk in the place of its conjugation with said rim 2 is shifted along the wheel axis 9 in relation to a central line 8 of the radial section of said disk in the place of its conjugation with said hub 3 toward said outward curved surface 6, **characterized in that** value of the shift of said central line 7 of the radial section of said disk 4 in the place of its conjugation with said rim 2 along said wheel axis 9 in relation to said central line 8 of said disk 4 radial section in the place of its conjugation with said hub 3 toward said disk outward curved surface 6 is within a range from 2 to 10 mm, and a distance between said central line 8 of the radial section of said disk 4 in the place of its conjugation with said hub 3 and a point 10 of the largest curving of said inner curved surface 5 of said disk 4 is within a range from 4 mm toward said inner curved surface 5 of said wheel 1 to 6 mm toward said outward curved surface 6 of said wheel 1.
